# FASCICULE DE BREVET EUROPEEN

(11) **EP 1 744 869 B1**
(45) Date de publication et mention de la délivrance du brevet: **02.04.2008**
(21) Numéro de dépôt: 05718747.8
(22) Date de dépôt: 18.04.2005
(51) Int. Cl.: B29C 65/02

(54) **PROCEDE DE SOUDAGE POUR CONTENANT**
BEHÄLTERSCHWEISSVERFAHREN
CONTAINER WELDING METHOD

(30) Priorité: 13.05.2004 CH 8432004
(43) Date de publication de la demande: 24.01.2007
(73) Titulaire: Aisapack Holding SA, 1896 Vouvry (CH)
(72) Inventeur: KELLER, Gerhard, Aisapack Holding SA, CH-1896 Vouvry (CH); ROY, Hugues-Vincent, Aisapack S.A., CH-1896 Vouvry (CH); THOMASSET, Jacques, Aisapack S.A., CH-1896 Vouvry (CH)
(74) Mandataire: Grosfillier, Philippe
(86) Numéro de dépôt international: PCT/IB2005/051254
(87) Numéro de publication internationale: WO 2005/110720

(56) Documents cités:
- DE-A- 3 703 875
- DE-C- 835 560
- GB-A- 1 032 581
- US-A- 3 163 311
- US-A- 3 227 319
- US-A- 3 934 780
- US-A- 4 503 990
- US-A- 4 582 209
- US-A- 4 724 654
- US-B1- 6 167 682

## Description

### Domaine de l'invention

La présente invention se rapporte à un procédé de fabrication de contenants permettant de souder une pièce semi-rigide de matière plastique ayant une forme légèrement concave à une extrémité d'un corps creux de matière plastique.

La présente invention est particulièrement destinée, mais pas de façon exclusive, au domaine de l'emballage de boissons alimentaires non carbonatées, tel que du jus de fruits, de la boisson vitaminée, du lait, du thé froid, etc.

Un autre domaine d'application de la présente invention est le domaine du tube plastique flexible pour l'emballage de produits visqueux tels que le dentifrice, les crèmes de soins corporels, les onctions pharmaceutiques, les produits alimentaires (mayonnaise, ketchup, moutarde), etc.

Un troisième domaine d'application de la présente invention est le domaine des cartouches pour produits techniques tels que du silicone ou du mastic.

### Etat de la technique

La réalisation de contenants munis d'une pièce semi-rigide scellée à un corps creux plastique de forme principalement cylindrique est une technologie fréquemment usitée lors de la fabrication d'emballage.

Un exemple de cette application est la fabrication de tubes flexibles où le produit est extrait par pression des doigts sur les parois du tube. Un tel contenant est réalisé par le scellage d'une tête semi-rigide à une des extrémités d'un corps creux cylindrique appelé communément la jupe. Dans ce domaine du tube flexible, on trouve des jupes produites à partir de feuilles mono- ou multicouches enroulées et soudées selon leur direction longitudinale, ainsi que des jupes obtenues par extrusion (ou co-extrusion pour des tubes multicouches) de corps creux. La tête de tube est produite de manière indépendante par injection moulage. Le scellage de la tête de tube est réalisé à l'aide de mandrin permettant de maintenir en place la jupe et la tête. La littérature relative à la réalisation de tubes flexibles est abondante : le brevet de Delavy & Keller (DE 4216889) donne une bonne appréciation de l'art antérieur.

Un autre domaine d'application de cette technologie est la production des poches flexibles droites avec une pièce semi-rigide à l'une de ses extrémités. Un exemple d'un tel emballage est donné dans le brevet de Spiess & Sohn (AU 293944) où une tête semi-rigide est soudée à une feuille flexible mise en forme de tube cylindrique de manière à fabriquer une poche souple droite. Michalsky (EP 1362797) présente aussi un emballage relativement similaire où le corps du container peut comporter à ses deux extrémités des pièces semi-rigides rapportées.

Le document US-A-3934780 décrit un procédé selon le préambule de la revendication 1 et un dispositif selon le préambule de la revendication 11.

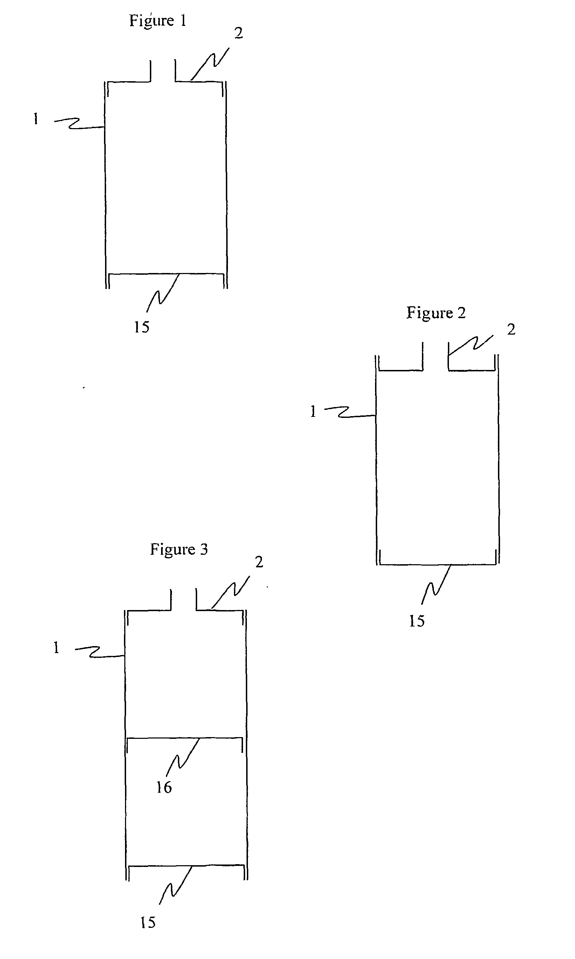

Du point de vue technique, pour réaliser de tels objets il est nécessaire de sceller une pièce semi-rigide sur une extrémité d'un corps cylindrique. Pour produire une soudure de qualité entre le tube et la pièce rapportée il faut soumettre la zone à souder aux conditions suivantes: exposer la zone à la température de soudage de la matière plastique tout en exerçant une certaine pression sur la zone pendant un certain temps. Il existe différentes manières d'amener la chaleur pour la soudure des pièces: chauffage par air chaud, chauffage par induction, chauffage par IR, chauffage par friction ou par ultrason. Dans tous ces procédés il faut exercer une force régulièrement repartie sur le pourtour du tube à la hauteur de la pièce à sceller. Les moyens mécaniques pour exercer une telle force ou pression sur le pourtour du tube sont compliqués, empêchent ou dérangent le transfert de chaleur et laissent des traces de plans de joint sur le produit. Communément ceci se fait à l'aide d'un mandrin intérieur qui exerce une force radiale nécessaire pour le scellage. L'utilisation d'un tel mandrin et les méthodes de soudage ou de fabrication sont bien connues dans le domaine de la production de tubes flexibles (figure 1 ; pièce **2**). D'une manière très similaire il est également possible de souder une pièce pour former le fond d'un tube (figure 2 ; pièce **15**). Par contre il est beaucoup moins évident de sceller une extrémité à un tube dont l'autre extrémité est partiellement ou totalement fermée, car il n'est plus possible d'utiliser de mandrin intérieur. De tels exemples sont présentés en figure 1 (scellage d'un fond **15** sur un tube avec une tête **2**), en figure 2 (scellage d'une tête **2** sur un tube possédant un fond **15**) ou en figure 3 (scellage d'une pièce intermédiaire **16** et d'un fond **15** sur un tube avec une tête **2**).

### Résumé de l'invention

La présente invention propose un procédé selon la revendication 1 et un dispositif selon la revendication 11.

La présente invention a pour but de proposer un procédé de fabrication des contenants flexibles qui permette de sceller une pièce de matière plastique ayant une forme légèrement concave à une extrémité d'un corps creux de matière plastique sans utiliser de mandrin à l'intérieur du corps creux. Le procédé selon l'invention propose une manière très simple pour engendrer la pression nécessaire à la soudure sans utilisation de mandrin intérieur.

La présente invention permet donc de fabriquer des objets tels que montrés en figure 1, 2 et 3 et ainsi de résoudre la problématique citée ci-dessus.

Par souci de simplification, mais de manière non-exhaustive, la description et les exemples ci-dessous se limiteront au cas de soudage de têtes et de fonds sur des tubes en matière laminée contenant une mince feuille en aluminium. Cette feuille en aluminium située à l'intérieur de la structure des couches de la matière composite donne des excellentes propriétés barrières à l'emballage et permet en même temps l'utilisation de la technologie de chauffe HF qui est très efficace et élégante. Ces tubes sont produits à partir d'une feuille ou d'une bande plate multicouche contenant au moins une couche aluminium et comportant une soudure à recouvrement longitudinale. Le chauffage par induction est également utilisé pour la soudure de la tête ou du fond. L'absence de moyens mécaniques pour produire la force d'appui et la pression de soudage rend l'application de la technologie de la soudure par induction particulièrement favorable parce que l'inducteur HF peut être placé très proche de la zone à souder et aucun problème de blindage de pièce mécanique est nécessaire.

Le procédé selon l'invention est basé sur le fait que la pression nécessaire au soudage de la tête ou du fond semi-rigide sur la jupe est obtenue par la déformation momentanée ou permanente de la pièce semi-rigide. En déformant de manière contrôlée cette pièce, il est possible d'augmenter son diamètre et ainsi la pièce appuie sur la jupe et sur un outillage de soudage mis à l'extérieur de la jupe. Ainsi il est possible d'engendrer une pression uniforme sur toute la zone à sceller.

### Description des figures

La figure 1 présente un container comprenant une jupe **1,** une tête convexe **2** et un fond concave **15.**
La figure 2 présente un container comprenant une jupe **1,** une tête concave **2** et un fond convexe **15.**
La figure 3 présente un container comprenant une jupe **1,** une tête convexe **2,** une pièce intermédiaire **15** et un fond concave **14.**

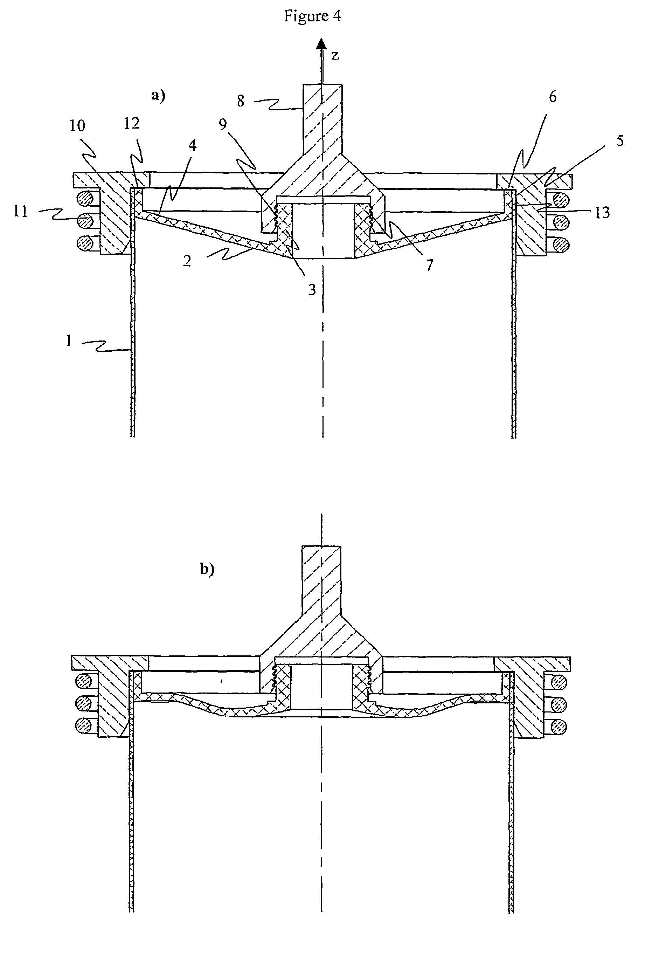

Les figures 4a et 4b présentent le dispositif selon l'invention dans le cas du soudage d'une tête **2** sur une jupe **1.** La jupe **1** et la tête **2** sont positionnées à l'aide d'un outillage de soudage **10** comprenant une bobine pour le soudage HF **11.** L'extrémité de la jupe **2** et de la tête **6** repose sur une zone d'appui de l'outillage **6** qui est perpendiculaire à la direction Z. La tête est soumise à une traction selon la direction Z à l'aide d'une tige de traction **8** comportant un taraudage **9** vissé sur le filetage **7** du col de la tête **3.** La figure 4a montre la tête **2** à l'état initial. Sur la figure 4b, la tête **2** est déformée sous l'effet de la force de traction due à la tige **8.** La déformation de la tête **2** engendre une force radiale qui dirige la périphérie de la tête **5** vers la face interne de la jupe **1.**

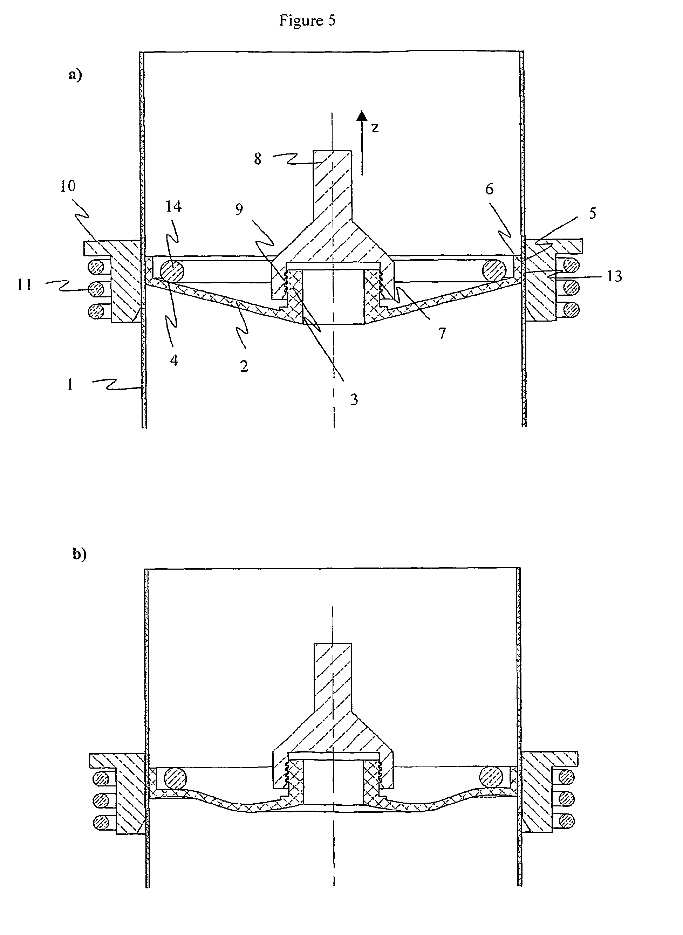

Les figures 5a et 5b présentent le dispositif selon l'invention dans le cas du soudage d'une tête **2** à l'intérieur d'une jupe **1.** La jupe **1** est positionnée à l'aide d'un outillage de soudage **10** se trouvant sur son pourtour extérieur et qui comprend une bobine pour le soudage HF **11.** La tête **6** repose dans sa partie concave **4** sur une pièce de support annulaire **14.** La tête est soumise à une traction selon la direction Z à l'aide d'une tige de traction **8** comportant un taraudage **9** vissé sur le filetage **7** du col de la tête **3.** La figure 5a montre la tête **2** à l'état initial. Sur la figure 5b, la tête **2** est déformée sous l'effet de la force de traction due à la tige **8.** La déformation de la tête **2** engendre une force radiale qui dirige la périphérie de la tête **5** vers la face interne de la jupe **1.**

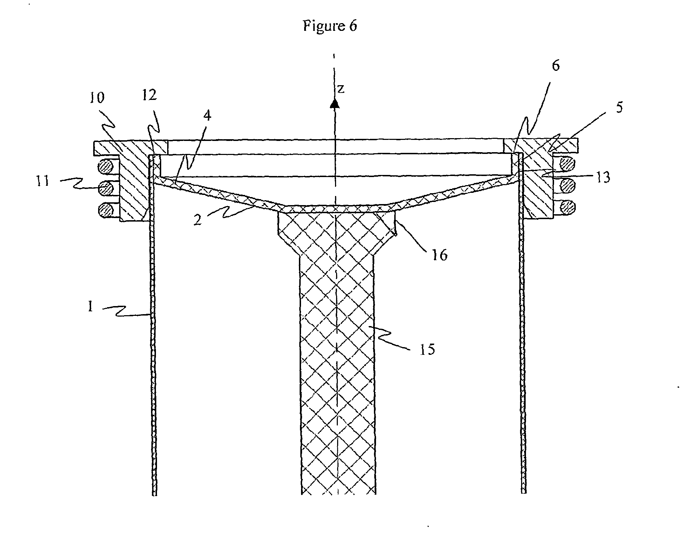

La figure 6 présente le dispositif selon l'invention dans le cas du soudage d'une tête **2** sur une jupe **1** alors que l'autre extrémité du corps creux n'est que partiellement fermée. La jupe **1** et la tête **2** sont positionnées à l'aide d'un outillage de soudage **10** comprenant une bobine pour le soudage HF **11.** L'extrémité de la jupe **2** et de la tête **6** repose sur une zone d'appui de l'outillage **6** qui est perpendiculaire à la direction Z. La tête est soumise à une poussée en sa partie centrale **16** selon la direction Z à l'aide d'une tige de poussée **15.**

### Description détaillée

Le principe du procédé selon l'invention s'explique clairement en définissant les différentes étapes du procédé présenté sur les figures 4a et 4b:
1) Il s'agit de positionner avec précision la jupe de tube **1** et la tête à l'intérieur d'un outillage de soudage **10** comme représenté sur la figure 4a. Cet outillage de soudage **10** doit recouvrir la zone à sceller et guider la jupe **2.** Cet outillage comporte une zone perpendiculaire **12** permettant d'y reposer la jupe **1** et la tête **2** selon la direction Z.
2) Une tige de traction **8** est accrochée au goulot de la tête **3.** Le maintien des 2 pièces peut être réalisé de différentes manières ; par exemple par vissage d'un taraudage **9** sur le filetage du col **7.**
3) Une force de traction est exercée par la tige **8** sur la tête **2** dans la direction Z. La tête étant maintenue en place par l'outillage de soudage **10** dans la zone d'appui **12,** il en résulte que la tête **2** va se déformer, comme représenté en figure 4b, à cause de sa forme légèrement concave si elle est en matière semi-rigide. La déformation de la **tête 2** engendre un léger glissement vers l'extérieur de l'extrémité de la tête **6** sur l'appui **12** et ainsi une augmentation du diamètre de la tête. La zone à souder de la tête **5** appuie ainsi avec une plus grande force et de manière homogène contre la paroi du tube **2** et contre la zone d'appui radiale de l'outillage **13.** La mise sous pression des deux pièces à sceller est ainsi obtenue.
4) Le soudage est réalisé par chauffage local de la jupe à l'aide de la bobine d'induction **11.**
5) Après soudage, la tige de traction **8** est dissociée de la tête **2.** En supprimant la force de traction, la tête retrouve sa géométrie initiale grâce aux propriétés élastiques de la matière plastique. Ainsi il est aisé de décharger l'objet obtenu (jupe avec pièce soudée) de l'outil de soudage **10.**

Ces différentes opérations sont réalisées à l'aide de pièces mécaniques et/ou à l'aide de surpression ou dépression à l'intérieur ou à l'extérieur du container.

Un point particulièrement avantageux de la présente invention est que ce procédé ne se limite pas au scellage de tête de tube ayant une ouverture en leur centre, mais peut aussi être appliqué à une pièce fermée telle qu'un fond de tube.

Un autre point particulièrement avantageux de la présente invention est que ce procédé ne se limite pas au scellage de pièces aux extrémités d'une jupe, mais peut aussi être appliqué en n'importe quel endroit le long de la jupe (voire figure 3). A titre d'exemple, mais de manière non exhaustive, l'utilisation de pièces intermédiaires permet de compartimenter le container ou de le rigidifier. Les figures 5a et 5b présentent le cas du soudage d'une tête **2** sur un endroit de la jupe **1** qui n'est pas une extrémité. Dans ce cas, l'outillage de soudage **10** est un cylindre entourant la jupe. La tête **2** est maintenue en position à l'aide d'un support **14** positionné dans la partie concave de la tête **4** (figure 5a). Lors de l'exécution de la force de traction par la tige **8,** la tête **2** se déforme comme représenté sur la figure 5b et son extrémité **6** se déplace vers l'extérieur à cause de la légère rotation de la tête sur le support **14.** Ainsi la zone à souder de la **tête 5** exerce une pression radiale sur la jupe et sur la zone d'appui de l'outillage de soudage **13.** Le soudage par chauffage HF local de la jupe est identique à celui décrit plus haut.

Selon un autre mode de fabrication de la présente invention, dans le cas de corps creux n'étant que partiellement fermé sur une extrémité, il est aussi possible de souder des pièces de forme légèrement concave sur l'autre extrémité du corps creux en appliquant une force de poussée sur la partie centrale de la face interne de ladite pièce (voir figure 6). Dans ce cas, l'application d'une force de poussée sur sa face interne permet de déformer la pièce de manière à augmenter son diamètre apparent et ainsi de créer une pression nécessaire au soudage de ladite pièce sur le corps creux.

Un autre aspect particulièrement avantageux de la présente invention est que ce procédé ne se limite pas aux contenants de forme cylindrique, mais permet de souder des pièces plastiques sur des corps creux flexibles ayant des sections de formes diverses convexes. A titre d'exemple, mais de manière non exhaustive, on peut citer les contenants ayant une section en forme d'ovale ou de polygone (carré, pentagone, hexagone, etc.) avec des angles arrondis.

Il est à relever que la déformation de la tête **2** peut être permanente et ainsi il est possible d'obtenir une tête avec une forme finale différente de sa forme initiale. Ceci est possible dans le cas d'une pièce fortement concave qui peut « se retourner » autour de cette zone concave **4.** Il en résulte que la hauteur du col **3** par rapport à l'extrémité **6** varie entre l'état initial et l'état final.

Selon un autre mode de fabrication de la présente invention il est possible de souder des pièces de forme bombée (concave ou convexe) sur la face interne de l'extrémité Libre d'un corps creux de matière plastique. Dans ce cas, l'application d'une force de traction sur sa partie centrale permet de déformer la pièce de manière à diminuer son diamètre apparent et ainsi à la positionner à l'intérieur d'un corps creux de diamètre égale au diamètre extérieur de la pièce dans son état initial. Une fois positionnée, on supprime la force de traction ce qui permet à la pièce de retrouver sa forme initiale et ainsi de plaquer la périphérie de la pièce contre la paroi interne du corps creux. En ajustant le diamètre extérieur de la pièce et le diamètre interne du corps creux on peut contrôler la force de pression exercée sur la zone de soudage entre les deux objets. Le soudage est ensuite effectuée à l'aide de chauffage HF comme décrit plus haut.

Selon la présente invention il est possible d'obtenir des contenants qui présentent la particularité d'avoir une tête et un fond comportant des soudures radiales avec le corps cylindrique formant le contenant. Ces soudures se distinguent par le fait qu'elles se situent à totalement à l'intérieur du corps cylindrique. D'autre part ces contenants ont une tête et un fond ne comportant aucune zone de contact avec le corps cylindrique qui se situe à l'extérieur du corps cylindrique. Les figures 1 et 2 présentent de tels contenants selon l'invention.

## Revendications

1. Procédé de fabrication d'un contenant en matière plastique comprenant la fixation du bord d'une pièce plate et flexible (2) sur la face interne d'un corps creux (1), ladite pièce (2) présentant une face concave et une face convexe,
ce procédé comprenant l'étape de mise en contact du bord de la pièce (2) avec la face interne du corps creux (1),
**caractérisé par le fait que** l'on effectue l'étape d' application d'une force de poussée ou de traction sur la partie centrale (3) de la pièce (2), selon une direction (z) perpendiculaire à sa surface, de manière à induire dans la pièce (2) des forces radiales qui résultent en un rapprochement du bord de la pièce (2) contre la face interne du corps creux (1).

2. Procédé selon la revendication 1 **caractérisé par le fait que** lesdites forces radiales sont induites en permanence.

3. Procédé selon la revendication 1 **caractérisé par le fait que** lesdites forces radiales sont induites temporairement, lors de la fixation de la pièce (2) sur ladite face interne.

4. Procédé selon l'une quelconque des revendications précédentes **caractérisé par le fait que** ladite force de poussée ou de traction s'applique sur la face concave de ladite pièce (2).

5. Procédé selon l'une quelconque des revendications 1 à 4 **caractérisé par le fait que** ladite force de poussée ou de traction s'applique sur la face convexe de ladite pièce (2).

6. Procédé selon l'une quelconque des revendications 1 à 4 **caractérisé par le fait que** l'on applique une force de traction sur la partie centrale (3) de ladite pièce (3), alors que la dite pièce (2) est maintenue en position à l'aide d'une contre-pièce (13) reposant uniquement sur la zone légèrement concave de ladite pièce (2) ou sur l'extérieur de ladite zone.

7. Procédé selon l'une quelconque des revendications 1-3 ou 5 **caractérisé par le fait que** l'on applique une force de poussée sur la partie centrale (3) de ladite pièce (2) tout en maintenant cette dernière en position l'aide d'une contre-pièce (13).

8. Procédé selon l'une quelconque des revendications précédentes **caractérisé par le fait que** :
- Lors du positionnement de ladite pièce (2) dans ledit corps creux (1) et lors du soudage, ladite pièce (2) est tenue uniquement sur sa face extérieure,
- Lors du positionnement de ladite pièce (2) dans ledit corps creux (1) on applique une force radiale qui déforme ladite pièce (2) et dirige la périphérie de ladite pièce (2) vers l'intérieur de manière à pouvoir l'introduire dans ledit corps creux (1).
- Lors de l'opération de soudage, on supprime la force radiale ce qui permet à ladite pièce (2) de retrouver sa forme initiale et à la périphérie de ladite pièce (2) d'exercer une pression sur la face interne dudit corps creux (1).

9. Procédé selon la revendication 8 **caractérisé en ce que** ladite force de poussée ou de traction est appliquée depuis l'intérieur du corps creux (1).

10. Procédé selon l'une quelconque des revendications précédentes comprenant une étape où l'on déforme la face concave de ladite pièce (2) pour la rendre convexe et vice-versa.

11. Dispositif pour la fabrication d'un contenant en matière plastique constitué d'un corps creux (1) et d'au moins une pièce plate et flexible (2) formant une surface courbe dont le bord est fixé sur la face interne dudit corps creux (1), **caractérisé par le fait qu'**il comprend des moyens (8) pour appliquer une force de poussée ou de traction sur la partie centrale (3) de ladite pièce (2), selon une direction perpendiculaire à sa surface, de manière à induire des forces radiales dirigées vers le bord de la pièce (2).

12. Dispositif selon la revendication 11 **caractérisé en ce que** lesdits moyens (8) pour appliquer une force de poussée ou de traction sont adaptés pour générer une traction sur la partie centrale (3) de la face externe de ladite pièce (2).

13. Dispositif selon la revendication 11 **caractérisé en ce qu'**il comprend des moyens pour comprimer de façon radiale ladite pièce (2) et **en ce que** lesdits moyens pour appliquer une force de poussée ou de traction consistent en la force de rappel induite par le retour de la pièce (2) dans sa forme initiale.

## Claims

1. A method for manufacturing a plastic container, comprising the edge-clamping of a flat, flexible piece (2) over the inner face of a hollow body (1), said piece (2) having a concave face and a convex face, **characterized in that** the following steps are performed:
- the edge of the piece (2) is placed in contact with the inner face of the hollow body (1);
- a thrust or tensile force is applied to the central part (3) of the piece (2) in a direction (z) perpendicular to its surface such as to induce in the piece (2) radial forces resulting in a bringing-together of the edge of the piece (2) against the inner face of the hollow body (1).

2. The method as claimed in claim 1, **characterized in that** said radial forces are permanently induced.

3. The method as claimed in claim 1, **characterized in that** said radial forces are temporarily induced at the time of the clamping of the piece (2) on said inner face.

4. The method as claimed in any one of the preceding claims, **characterized in that** said thrust or tensile force is applied to the concave face of said piece (2).

5. The method as claimed in any one of claims 1 to 4, **characterized in that** said thrust or tensile force is applied to the convex face of said piece (2).

6. The method as claimed in any one of claims 1 to 4, **characterized in that** a tensile force is applied to the central part (3) of said piece (3) while said piece (2) is held in position with the aid of a backing piece (13) resting solely on the slightly concave area of said piece (2) or on the outside of said area.

7. The method as claimed in any one of claims 1-3 or 5, **characterized in that** a thrust force is applied to the central part (3) of said piece (2) while holding the latter in position with the aid of a backing piece (13).

8. The method as claimed in any one of the preceding claims, **characterized in that**:
- when said piece (2) is positioned in said hollow body (1) and when welding takes place, said piece (2) is held solely on its outer face;
- when said piece (2) is positioned in said hollow body (1), a radial force is applied that deforms said piece (2) and directs the periphery of said piece (2) toward the inside so that it is possible to insert it in said hollow body (1);
- at the time of the welding operation, the radial force is removed, which enables said piece (2) to resume its initial form and, at the periphery of said piece (2), to exert a pressure on the inner face of said hollow body (1).

9. The method as claimed in claim 8, **characterized in that** said thrust or tensile force is applied from the inside of the hollow body (1).

10. The method as claimed in any one of the preceding claims, comprising a step in which the concave face of said piece (2) is deformed in order to render it convex, and vice versa.

11. A device for manufacturing a plastic container consisting of a hollow body (1) and at least one flexible, flat piece (2) forming a curved surface, the edge of which is clamped on the inner face of said hollow body (1), **characterized in that** it comprises means (8) for applying a thrust or tensile force on the central part (3) of said piece (2) in a direction perpendicular to its surface such as to induce radial forces directed toward the edge of the piece (2).

12. The device as claimed in claim 11, **characterized in that** said means (8) for applying a thrust or tensile force are adapted in order to generate a tensile force on the central part (3) of the outer face of said piece (2).

13. The device as claimed in claim 11, **characterized in that** it comprises means for radially compressing said piece (2) and **in that** said means for applying a thrust or tensile force consist of the return force induced by the return of the piece (2) to its initial form.

## Patentansprüche

1. Verfahren zur Herstellung eines Kunststoffbehälters, umfassend die Befestigung des Randes eines flachen und biegsamen Stücks (2) auf der Innenfläche eines Hohlkörpers (1), wobei das Stück (2) eine konkave Fläche und eine konvexe Fläche aufweist, wobei dieses Verfahren den Schritt des Herstellens eines Kontakts des Randes des Stücks (2) mit der Innenfläche des Hohlkörpers (1) umfasst, **dadurch gekennzeichnet, dass** der Schritt des Anlegens einer Schub- oder Zugkraft an den mittleren Teil (3) des Stücks (2) in eine Richtung (Z) senkrecht auf seine Fläche durchgeführt wird, um in das Stück (2) Radialkräfte einzuleiten, die sich aus einer Annäherung des Randes des Stücks (2) an die Innenfläche des Hohlkörpers (1) ergeben.

2. Verfahren nach Anspruch 1, **dadurch gekennzeichnet, dass** die Radialkräfte permanent eingeleitet werden.

3. Verfahren nach Anspruch 1, **dadurch gekennzeichnet, dass** die Radialkräfte vorübergehend bei der Befestigung des Stücks (2) auf der Innenseite eingeleitet werden.

4. Verfahren nach einem der vorhergehenden Ansprüche, **dadurch gekennzeichnet, dass** die Schub- oder Zugkraft auf die konkave Fläche des Stücks (2) ausgeübt wird.

5. Verfahren nach einem der Ansprüche 1 bis 4, **dadurch gekennzeichnet, dass** die Schub- oder Zugkraft auf die konvexe Fläche des Stücks (2) ausgeübt wird.

6. Verfahren nach einem der Ansprüche 1 bis 4, **dadurch gekennzeichnet, dass** eine Zugkraft auf den mittleren Teil (3) des Stücks (3) ausgeübt wird, während das Stück (2) mit Hilfe eines Gegenstücks (13) gehalten wird, das nur auf der leicht konkaven Zone des Stücks (2) oder außerhalb der Zone aufliegt.

7. Verfahren nach einem der Ansprüche 1 bis 3 oder 5, **dadurch gekennzeichnet, dass** eine Schubkraft auf den mittleren Teil (3) des Stücks (2) ausgeübt wird, wobei dieses letztgenannte mit Hilfe eines Gegenstücks (13) in Position gehalten wird.

8. Verfahren nach einem der vorhergehenden Ansprüche, **dadurch gekennzeichnet, dass**:
- bei der Positionierung des Stücks (2) im Hohlkörper (1) und beim Schweißen das Stück (2) nur auf seiner Außenseite gehalten wird,
- bei der Positionierung des Stücks (2) im Hohlkörper (1) eine Radialkraft angelegt wird, die das Stück (2) verformt und die Peripherie des Stücks (2) zum Inneren richtet, um es in den Hohlkörper (1) einführen zu können,
- beim Schweißen die Radialkraft aufgehoben wird, wodurch es dem Stück (2) möglich ist, seine Anfangsform wieder zu finden, und der Peripherie des Stücks (2) möglich ist, einen Druck auf die Innenseite des Hohlkörpers (1) auszuüben.

9. Verfahren nach Anspruch 8, **dadurch gekennzeichnet, dass** die Schub- oder Zugkraft vom Inneren des Hohlkörpers (1) aus angelegt wird.

10. Verfahren nach einem der vorhergehenden Ansprüche, umfassend einen Schritt, in dem die konkave Fläche des Stücks (2) verformt wird, um sie konvex zu machen und umgekehrt.

11. Vorrichtung zur Herstellung eines Kunststoffbehälters, der von einem Hohlkörper (1) und mindestens einem flachen und biegsamen Stück (2) gebildet ist, das eine gekrümmte Fläche bildet, deren Rand auf der Innenfläche des Hohlkörpers (1) befestigt ist, **dadurch gekennzeichnet, dass** sie Mittel (8) umfasst, um eine Schub- oder Zugkraft auf den mittleren Teil (3) des Stücks (2) in eine Richtung senkrecht auf seine Oberfläche auszuüben, um Radialkräfte einzuleiten, die zum Rand des Stücks (2) gerichtet sind.

12. Vorrichtung nach Anspruch 11, **dadurch gekennzeichnet, dass** die Mittel (8) zum Anlegen einer Schub- oder Zugkraft derart vorgesehen sind, dass sie einen Zug auf den mittleren Teil (3) der Außenseite des Stücks (2) erzeugen.

13. Vorrichtung nach Anspruch 11, **dadurch gekennzeichnet, dass** sie Mittel umfasst, um das Stück (2) radial zusammenzudrücken, und dass die Mittel, um eine Schub- oder Zugkraft anzulegen, in der Rückstellkraft bestehen, die durch die Rückkehr des Stücks (2) in seine ursprüngliche Form eingeleitet wird.
